# EUROPEAN PATENT SPECIFICATION

(11) **EP 2 695 420 B1**
(45) Date of publication and mention of the grant of the patent: **21.08.2019**
(21) Application number: 11715188.6
(22) Date of filing: 07.04.2011
(51) Int. Cl.: H04W 28/08, H04W 72/04, H04W 92/20, H04L 5/00

(54) **FUNCTIONAL SPLIT FOR A MULTI-NODE CARRIER AGGREGATION TRANSMISSION SCHEME**
FUNKTIONELLE TEILUNG FÜR MEHRKNOTEN-TRÄGERAGGREGATION IN EINEM ÜBERTRAGUNGSSCHEMA
SÉPARATION FONCTIONNELLE POUR TECHNIQUE DE TRANSMISSION À AGRÉGATION DE PORTEUSES MULTI-NOEUD

(43) Date of publication of application: 12.02.2014
(73) Proprietor: Nokia Solutions and Networks Oy, 02610 Espoo (FI)
(72) Inventor: FREDERIKSEN, Frank, DK-9270 Klarup (DK); KOLDING, Troels, Emil, DK-9270 Klarup (DK); KOVACS, Istvan, Zsolt, DK-9000 Aalborg (DK); PEDERSEN, Klaus, Ingemann, DK-9000 Aalborg (DK); ROSA, Claudio, DK-8900 Randers (DK)
(74) Representative: Nokia EPO representatives
(86) International application number: PCT/EP2011/055409
(87) International publication number: WO 2012/136256

(56) References cited:
- WO-A1-2010/105145
- WO-A1-2011/100492
- WO-A2-2010/016670
- WO-A2-2011/017515
- US-A1- 2007 286 126
- RESEARCH IN MOTION ET AL: "Support of Carrier Aggregation with Heterogeneous Deployment of Component Carriers", 3GPP DRAFT; R1-093289(RIM-CARRIER AGGREGATION FOR HETEROGENEOUS CARRIER DEPLOYMENT), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090818, 18 August 2009 (2009-08-18), XP050351614, [retrieved on 2009-08-18]
- NOKIA SIEMENS NETWORKS ET AL: "Aggregating HSDPA and LTE carriers", 3GPP DRAFT; R1-111060, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Taipei, Taiwan; 20110221, 17 February 2011 (2011-02-17), XP050490814, [retrieved on 2011-02-17]
- NOKIA SIEMENS NETWORKS (RAPPORTEUR): "Corrections and new Agreements on Carrier Aggregation", 3GPP DRAFT; 36300_CR0XXX-(REL-10)_R2-104195 ON CA STAGE 2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628, 10 August 2010 (2010-08-10), XP050451450, [retrieved on 2010-08-10]

## Description

### Field of the Invention

The present invention relates to apparatuses, methods and a computer program product for achieving a functional split for a multi-node carrier aggregation transmission scheme.

### Related background Art

The following meanings for the abbreviations used in this specification apply:
- AMC: Adaptive modulation & coding
- A/N: Ack/Nack (Acknowledgement/Non-Acknowledgement)
- CA: Carrier aggregation
- CC: Component carrier
- CPRI: Common public radio interface
- CQI: Channel quality indicator
- DL: Downlink
- eNB: enhanced Node-B
- HARQ: Hybrid automatic repeat request
- HeNB: Home enhanced Node-B
- HSPA: High-speed packet access
- I-HSPA: Internet high-speed packet access
- LTE: Long term evolution
- LTE-A: LTE-Advanced
- MAC: Media access control
- MUX: Multiplex
- OBSAI: Open Base Station Architecture Initiative
- PDCP: Packet Data Convergence Protocol
- PDU: Packet data unit
- PUCCH: Physical uplink control channel
- PUSCH: Physical uplink shared channel
- RLC: Radio link control
- UE: User equipment
- UL: Uplink

Embodiments of the present invention relate to a heterogeneous network scenario in which different types of base station nodes are provided. As an example, a case with macro-eNBs and pico-eNBs is considered, although the small cells could be microcells or even Femtocells in future standardization releases as well. That is, a case is considered in which within the coverage area of a large cell (served, e.g., by the macro-eNB) other smaller cells (served, e.g., by the pico-eNB) are provided. Hence, the larger cell is also referred to as umbrella cell. Key requirement is that an X2 interface is defined between the small cell and the larger umbrella cell. For such cases, the macro-eNBs could be installed to operate on certain frequencies, while the pico nodes are using other frequencies.

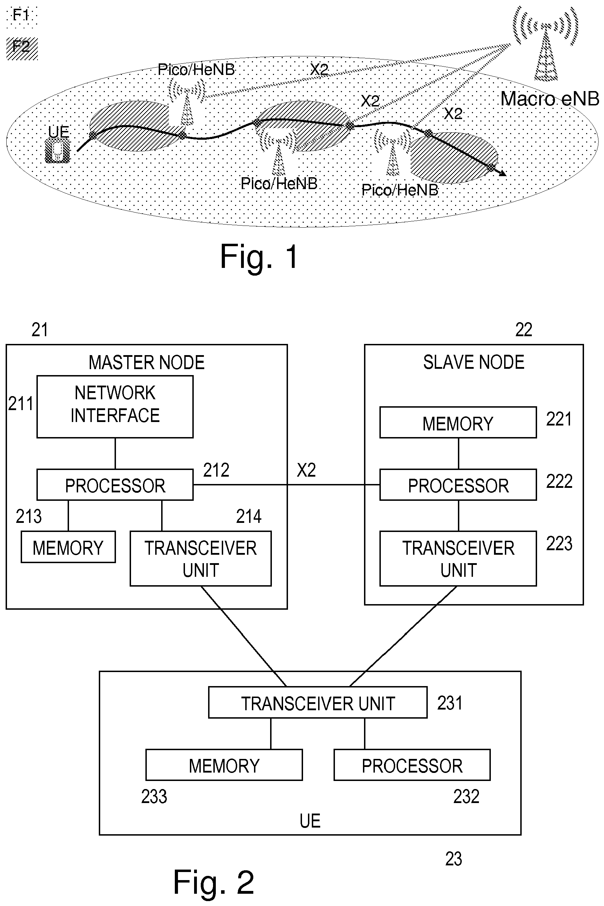

Such a situation is shown in Fig. 1. In this example, a macro-eNB is using carrier F1, whereas pico-eNBs (also referred to HeNBs) are using carrier F2.

WO 2011/017515 discusses a method for implementing coordinated multi-point transmission and reception in a multi-carrier network system including a first serving network node and a second cooperating network node. The method includes the steps of configuring a first transmission channel. The first transmission channel is established on the first serving network node. The method includes configuring a second transmission channel. The second transmission channel is established on the second cooperating node. The method includes transmitting control information using the first transmission channel. The control information allocates a resource on the second transmission channel and the second transmission channel is not established on the first serving network node.

US 2007/286126 discusses methods and apparatus for tunneling packets between remote and serving Access points for delivery to an access terminal (AT). Methods and apparatus for communicating control values and/or information in addition to information to be delivered to an AT over an airlink are also described. An AT uses the received control information to recover communicated packets. Some features support the use of various headers and/or indicators in the headers, e.g., RLP and/or Packet Correlation Protocol (PCP) headers, which may be used to control routing of communicated payloads to an RLP processing module corresponding to an AP which was the source of the communicated payload.

WO 2010/016670 discusses a method and an apparatus of transmitting data in a multi-radio frequency (RF) system. The method includes transmitting first data through a first physical channel to a first base station (BS), transmitting second data through a second physical channel to a second BS, wherein the first data and the second data are simultaneously transmitted.

NOKIA SIEMES NETWORKS ET AL: "Aggregating HSDPA and LTE carriers" 3GPP draft R1-111060 describes a system comprising a master LTE network node and a slave HSPA network node. In operation, a LTE+HSPA UE located in an overlapping area may be served on the downlink by the LTE network node over an LTE carrier and by the HSPA network node over a HSPA carrier. In this way, carrier aggregation may be performed using the LTE and HSPA network nodes (see section 2.1 and Figure 2).

### Summary of the Invention

The present invention is defined by the appended independent claims. Certain more specific aspects of the invention are defined by the dependent claims. Embodiments aim to improve the downlink data transmission in such a situation.

According to a first aspect, this is accomplished by an apparatus comprising a network interface configured to receive and/or send data for a user equipment from and/or to a network, a processor configured to control a split of the data for at least two component carriers, and a transceiver unit configured to perform a downlink and/or uplink transmission with a user equipment via at least a first one of the at least two component carriers. The processor is configured to send and/or receive the data of at least a second one of the at least two component carriers to and/or from
a slave network node.

According to a further aspect, an apparatus is provided which comprises a processor configured to receive and/or send data for at least one component carrier for a user equipment from and/or to a master network node, and a transceiver unit configured to perform a downlink and/or an uplink transmission with the user equipment via the at least one component carrier.

According to another aspect, an apparatus is provided which comprises a transceiver unit configured to receive and/or to send at least a first component carrier from and/or to a first network node, and a at least a second component carrier from and/or to a second network node.

### Brief Description of the Drawings

These and other objects, features, details and advantages will become more fully apparent from the following detailed description of embodiments of the present invention which is to be taken in conjunction with the appended drawings, in which:
Fig. 1 shows an example for heterogeneous network scenario in which a macro-eNB and a plurality of pico-eNBs are provided within the coverage area of the macro-eNB,
Fig. 2 shows a master node, a slave node and a UE according to an embodiment of the present invention, and
Fig. 3 shows an example of a function-split for downlink multi node transmission to a single UE according to an embodiment of the present invention.

### Detailed Description of embodiments

In the following, description will be made to embodiments of the present invention. It is to be understood, however, that the description is given by way of example only, and that the described embodiments are by no means to be understood as limiting the present invention thereto.

According to several embodiments, the problem is addressed how to best form the downlink data transmission from multiple nodes to a UE. Secondly, it is aimed at proposing a solution that can be fully standardized, so that it could work even for cases where the involved macro and pico nodes are from different vendors.

Before explaining the embodiments in detail, a problem underlying the present application is described in more detail in the following by referring to Fig. 1. Fig. 1 shows a scenario in which a macro-eNB serves a larger cell on a carrier frequency F1, and a plurality of pico-eNBs (or HeNBs) which server smaller cells within larger cell on a carrier frequency F2. The coverage area of the macro-eNB is indicated by dots, and the coverage areas of the pico-eNBs are indicated by hatching.

When a user is in the coverage area of both the macro and pico-eNBs (see example in Fig. 1) it would be beneficial in some cases to exploit both network layers for transmission to the user. That is in the areas marked with hatching, a UE would be able to be served simultaneously by both macro and pico-eNBs.

That essentially means splitting the data stream to the user so it is transmitted via both the macro and pico nodes to the UE on separate component carriers.

Embodiments of the present invention propose an architectural functional-split for LTE that facilitate such downlink data transmission via both macro and pico-eNBs to the same UE. In certain embodiments, it is built on the already defined LTE carrier aggregation (CA) functionality that is defined in Rel-10. Although the presented solution in this invention report is outlined for the LTE case, similar measures are applicable also for HSPA with multi-carrier capabilities, more specifically with I-HSPA microcell NB (i.e. no RNC).

Nevertheless, according to several embodiments, it is aimed to rely as much as possible on the LTE Rel-10 standardized framework for CA, so that only minimum changes and updates are required to have such scenarios supported in coming LTE releases.

In particular, Rel-10 of the E-UTRA specifications introduces carrier aggregation (CA), where two or more component carriers (CCs) are aggregated in order to support wider transmission bandwidths up to 100MHz. In CA it is possible to configure a UE to aggregate a different number of CCs originating from the same eNB and of possibly different bandwidths in the uplink (UL) and downlink (DL).

In the following, a general embodiment for a master network node (e.g., a macro-eNB) a slave network node (e.g., a pico-eNB) and a user equipment is described by referring to Fig. 2.

In particular, a first apparatus 21 (which may be the master network node or a part thereof) may comprise a network interface 211 configured to receive and/or send data for a user equipment 23 from and/or to a network, a processor 212 configured to control a split of the data for sending and/or receiving over at least two component carriers, and a transceiver unit 214 configured to perform a downlink and/or uplink transmission with a user equipment via at least a first one of the at least two component carriers. The processor may be further configured to send and/or the data of at least a second one of the at least two component carriers to and/or from a slave network node (e.g., 22).

That is, for example in the downlink case, the network interface 211 receives a data stream from the network (core network or the like) intended for the UE 23. The processor 212 splits the data stream such that data for at least two component carriers can be generated. At least one of the component carriers is generated by the transceiver unit 214 and sent to the UE 23. Data for the at least second component carrier is sent from the processor 212 to the slave network node 22.

In the uplink case, the transceiver unit 214 receives data via at least a first component carrier from the UE 23. The processor 212 also receives data of at least a second component carrier from the slave network node 22. The processor 212 combines the data of the at least first component carrier and the at least second component carrier, and the network interface 211 forwards the data to the network.

A second apparatus 22 (which may be the slave network node or a part thereof) may comprise a processor 222 configured to receive and/or send data of at least one component carrier for a user equipment (e.g., 23) from and/or to a master network node (e.g., 21), and a transceiver unit configured to perform a downlink and/or uplink transmission with the user equipment via the at least one component carrier.

That is, for example in the downlink case, the processor 222 receives data for at least one component carrier for the user equipment 23, and the transceiver unit 223 sends the data via the component carrier to the user equipment. In the uplink case, the transceiver unit 223 receives data via at least one component carrier, and the processor 222 forwards the received data to the master network node 21.

A third apparatus 23 (which may be the user equipment or a part thereof) comprises a transceiver unit 231 configured to receive and/or to send at least a first component carrier from and/or to a first network node, and a at least a second component carrier from and/or to a second network node.

For example, the first network node may be the master network node 21, and the second network node may be the slave network node 22. In the downlink case, the transceiver unit 231 may receive data on at least a first component carrier from the master network node 21, and data on at least a second component carrier from the slave network node 22. In the uplink case, the transceiver unit 231 may sent data on at least a first component carrier to the master network node 21, and data on at least a second component carrier to the slave network node 22.

The apparatuses may comprise memories 213, 221 and 233 for storing data and programs, by means of which the processors 212, 222 and 232 may carry out their corresponding functions.

Thus, in a downlink case, the data stream intended for the user equipment is split such that at least a first component carrier is sent from the first apparatus (the master network node) to the user equipment, and at least a second component carrier is sent from the second apparatus (the slave network node) to the user equipment. In this way, the data intended for the user equipment from a core network are received by the first apparatus only, which performs splitting of the data stream.

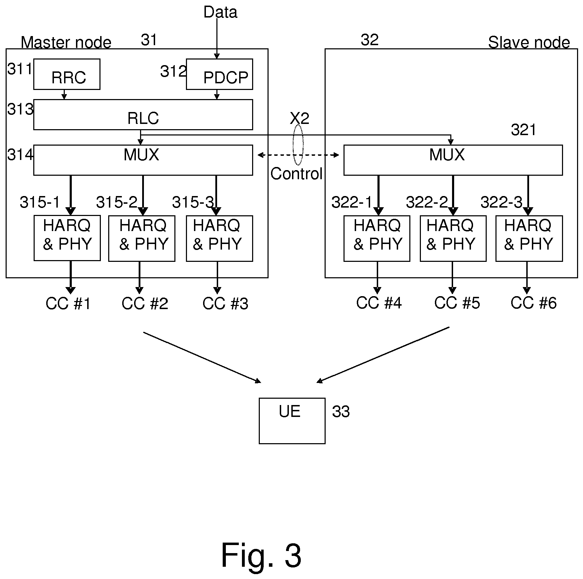

In the following, a more detailed embodiment is described by referring to Fig. 3. Fig. 2 shows a functional-split for downlink multi node transmission to single UE on different carriers according to the present embodiment. For simplifying the description, the downlink case is described. However, similar operations also apply for the uplink case.

As shown in Fig. 3, master node 31 (as an example for the first apparatus 21 described above) and a slave node 32 (as an example for the second apparatus 22 described above) are provided, which simultaneously serve a UE 33 on different frequencies (e.g., frequencies F1 and F2 shown in Fig. 1).

Hence, according to the present embodiment, the terminology of UE-specific master node and slave node for UEs is introduced that are able to receive data from two base station nodes. The concept could be extended to have multiple slave nodes in case the transmission takes place from more than two base station nodes to the UE.

The RRC (Radio resource control) is terminated in the master node, as indicated by the functional block 311.

The PDCP (Packet data convergence protocol) is located only in the master node, as indicated by the functional block 312.

According to the present embodiment, the RLC functionality (i.e. including outer ARQ functionality) is located only in the master node, as indicated by the functional block 313.

This is to be preferred for the case that the concept may work in a backwards compatible way with Release 10 users. Also, with this solution the protocol architecture at the UE will not change depending on whether the UE is configured in intra-site or inter-site carrier aggregation. It is noted that use with Release 10 UEs is, in principle, possible but would in practice mean that no fast L1/L2 radio resource management (i.e. channel aware scheduling, fast AMC and L1 HARQ) is possible at the slave node since with Release 10 uplink control information (HARQ A/N and CQI) is carried using the PCell (primary cell) (unless UE is scheduled with PUSCH only on SCell (secondary cell) and simultaneous PUCCH+PUSCH is not configured). Furthermore, a split further below the RLC level (e.g., on MUX level) is not attractive as the multiplexing (MUX) or scheduling functionality needs to be coupled with the local resources considering other active users at the individual nodes.

Downlink data transmission happens via independent MAC functionality from the master and slave nodes.

In particular, as illustrated in Fig. 3, the MAC includes MUX (also referred to as packet scheduler) 314, and Hybrid ARQ (HARQ) 315-1 to 315-3 for each component carrier CC#1 to CC#3. For the example in Fig. 3, a scenario with transmission on three component carriers (CCs) from each of the two nodes is shown. However, the number of CCs used by each node could of course vary. For example, there may be only a transmission on one CC from each of the two nodes on different frequencies.

The slave node 32 also comprises a MUX 321, and HARQ 322-1 to 322-3 individually for the component carriers CC#4 to CC#6. As described above, the number of CCs and, thus, the number of HARQs may vary.

Data transmitted from the slave node are pulled by the MUX from the RLC in the master node using X2 based protocol. Depending on the implemented transport protocol, the traffic flow mechanism has to adapt to any available latency which can be measured when the initial secure X2 tunnel is being setup. E.g. if the latency is larger, then the MUX in the slave node needs to more aggressively ask for data not to run out. The RLC layer in the master node will deliver its data to the two MUX (one (314) in the master node and one (321) in the slave mode) on a first-come first-serve basis or based on other load information exchanged between the two nodes (further optimization).

The master node for a particular UE can configure other eNBs to act as slave node for the UE. Similarly, the master node can disable configured slave nodes via X2 signalling.

It is noted that users having the 'slave' node as a primary cell will utilize the local RLC functionality. That is, the node that is configured as 'slave' for one UE can operate as the only (i.e. 'master') node for another UE. That is, the master node and the slave node may have the same structure, but can be configured to act as a master node for a particular UE and as slave node for another UE.

In the following, the correspondences between the general embodiment described above by referring to Fig. 2 and the more detailed embodiment described in connection with Fig. 3 are described: The PDCP functionality 312 corresponds to the network interface 211 of the first apparatus, the RLC functionality 313 corresponds to the processor of the first apparatus, and the MUX 314 and the HARQ functionalities 315-1 to 315-3 correspond to the transceiver unit of the first apparatus. The MUX 321 of the slave node 32 corresponds to the processor of the slave node, and the MUX 321 and the HARQ functionalities 322-1 to 322-3 correspond to the transmission unit of the second apparatus.

It is however noted that the general embodiment and the present invention in general is not limited to the specific examples given above.

In particular, in the above embodiment described in connection with Fig. 3, it is described that the RLC functionality is provided completely in the master node. However, the invention is not limited to this. That is, the data split for the component carriers can be effected below the PDCP functionality and the above the MAC (MUX) functionality, so that at least a part of the RLC functionalities can also be conducted in the slave node.

For example one RLC functionality per UE can be configured in the master node, and a part of the RLC functionalities (e.g., RLC PDU segmentation) can be provided (or "replicated") in the slave node.

The distribution of the RLC functionality on the master node and the slave node can also differ between the downlink case and the uplink case. For example, in the downlink case the RLC functionality could be configured such that a part thereof (e.g., the RLC PDU segmentation described above) is provided in the slave node, whereas in the uplink case the RLC functionality is completely configured in the master node.

The following considerations can be taken into account when implementing the embodiments:
The proposed idea would require standardization efforts for the X2 interface to facilitate the data flow from master to slave node between the RLC entity and MAC.

It is preferable to have this standardized so the proposed scheme could function even for multi-vendor scenarios where the master and slave nodes are from different vendors.

In addition, the X2 protocol should be augmented in order add new functionality to facilitate configuration of new eNode-Bs as slave node(s) from the current master node.

Finally, some additional exchange of control information between master and slave nodes could be beneficial to optimize the performance. Examples of such control info exchange could include (but is not limited to):
- Exchange of various MAC-c information elements and/or other physical layer control information.
- (From slave to master) Exchange of average channel quality and load information for flow control purposes (This could be similar to information exchange concepts proposed for L3 relays (WO 2009/093164 "Method, Apparatus and Computer Program FOR signaling channel quality information in a network that employs relay nodes", wherein from a plurality of user equipments indications of channel quality experienced by the user equipments are received, and the received indications are aggregated into a compound signal quality metric. Thereafter, an indication of the compound signal quality metric is sent to an access node controlling a cell in which the user equipments operates).
- (From master to slave) Indication that a SCell under control of the slave node should be / has been / is going to be activated/deactivated (depending on whether the MAC CE including activation/deactivation message is transmitted via the PCell or the SCell)

It is noted that in the above detailed embodiment, a case was described that the master network node is a macro-eNB, i.e., the base station which controls the larger cell. However, the invention is not limited to this, and it is possible that also a pico-eNB, i.e., a base station which controls the smaller cell, functions as a master node, whereas the macro-eNB functions as a slave node.

Furthermore, both network nodes (base stations) could be equal. For example, two eNB could work together in an overlapping area of the cells, in which the UE is located. That is, one the eNBs would then be the master node, and the other eNB would be the slave node.

In addition, it is noted that the actual structure of the master node and the slave node may be the same, so that only the function of the slave node is switched to a slave mode based on a control signal from the master node.

Moreover, the nodes described above as eNBs and/or macro and pico-eNBs are not limited to these specific examples and can be any kind network node (e.g., a base station) which is capable for transmitting via component carriers to a user equipment.

In the following, some advantages are described which can be achieved by the embodiments described above.

For example, according to the embodiments, a UE is able to be simultaneously served from two or more different eNBs operating at different frequency carriers. This results in higher data rates for the user due to the higher accessible bandwidth.

As the proposed functional split between master and slave node to a large extend follows the LTE Rel-10 CA framework (i.e. independent HARQ and PHY per CC, only one RRC per UE, only one PDCP per UE, per radio bearer, etc.), the proposed scheme may in principle work for LTE Rel-10 UEs with CA capabilities.

The proposed solution is assumed attractive also from eNB point of view, since only few modifications are required as compared to the functionality already needed for LTE Rel-10 CA.

Advanced traffic steering considering mobility and network load can be centralized for better overall network performance using the small cell as an ad-hoc capacity layer and the macro layer as a robust access layer.

According to a first aspect of general embodiments of the present invention, an apparatus is provided comprising
a network interface configured to receive and/or send data for a user equipment from and/or to a network,
a processor configured to control a split of the data for at least two component carriers, and
a transceiver unit configured to perform a downlink and/or uplink transmission with a user equipment via at least a first one of the at least two component carriers,
wherein the processor is configured to send and/or receive the data of at least a second one of the at least two component carriers to and/or from a slave network node.

The first aspect may be modified as follows:
The data for at least the second one of the at least two component carriers may be sent to and/or received from the slave network node are for said user equipment. That is, a connection via at least one component carrier may established between the apparatus and the user equipment, and a connection via at least a further component carrier may be established between the slave network node and the user equipment.

The processor may comprise at least a part of a radio link control functionality.

The processor may comprises a packet data control protocol functionality.

The processor may comprises a radio resource control functionality. That is, the radio resource control may be terminated in the apparatus.

The transceiver unit may comprise an independent transceiver for each component carrier and a common packet scheduler.

The processor may be configured to send and/or receive the data for the at least second component carrier based on a request from the slave network node and/or based on load conditions of the slave network node and the apparatus.

The processor may be configured to configure a network node to act as the slave network node and/or to disable a slave network node via a control signalling.

The apparatus according to the first aspect may be a master network node or a part thereof. For example, the master network node.

According to a second aspect of general embodiments of the present invention, an apparatus is provided comprising
an processor configured to receive and/or send data for at least one component carrier for a user equipment from and/or to a master network node, and
a transceiver unit configured to perform a downlink and/or an uplink transmission with the user equipment via the at least one component carrier.

The second aspect may be modified as follows:
The transceiver unit may comprises an independent transceiver for each component carrier and a common packet scheduler.

The transceiver unit may be configured to request sending and/or receiving the data for the at least one component carrier from the master network node.

The transceiver unit may be configured to request sending the data for the at least one component carrier based on a connection condition between the apparatus and the master network node.

The apparatus may be configured to act as a slave network node and/or to be disabled as a slave network via a control signalling from the master network node.

The processor may comprise at least a part of a radio link control functionality.

The part of the radio link control functionality may be performing a packet data unit segmentation.

According to a third aspect of general embodiments of the present invention, an apparatus is provided comprising
a transceiver unit configured to receive and/or to send at least a first component carrier from and/or to a first network node, and a at least a second component carrier from and/or to a second network node.

The first network node may be a master network node, and the second network node may be a slave network node, for example.

According to a fourth aspect of general embodiments of the present invention, an system is provided comprising a master network node including an apparatus according to the first aspect and/or its modifications, and a slave network node comprising an apparatus according to the second aspect and/or its modifications.

According to a fifth aspect of general embodiments of the present invention, a method is provided comprising
receiving and/or data for a user equipment from and/or to a network,
controlling a split of the data for at least two component carriers,
performing a downlink and/or uplink transmission with a user equipment via at least a first one of the at least two component carriers, and
sending and/or receiving the data for at least a second one of the at least two component carriers to and/or from a slave network node.

The fifth aspect may be modified as follows:
The data of at least the second one of the at least two component carriers sent to and/or received from the slave network node may be for the user equipment.

The method may further comprise performing at least a part of a radio link control functionality.

The method may further comprise performing a packet data control protocol functionality.

The method may further comprise performing a radio resource control functionality.

The method may further comprise
sending and/or receiving the data for the at least second component carrier based on a request from the slave network node and/or based on load conditions of the slave network node and the apparatus performing the method.

The method may further comprise configuring a network node to act as the slave network node and/or to disable a slave network node via a control signalling.

According to a sixth aspect of general embodiments of the present invention, a method is provided comprising
receiving and/or sending data for at least one component carrier for a user equipment from and/or to a master network node, and
performing a downlink and/or an uplink transmission with the user equipment via the at least one component carrier.

The sixth aspect may be modified as follows:
The method may further comprise requesting sending and/or receiving the data for the at least one component carrier from the master network node.

The requesting of sending and/or receiving the data for the at least one component carrier may be based on a connection condition between the apparatus and the master network node.

An apparatus performing the method may be configured to act as a slave network node and/or to be disabled as a slave network via a control signalling from the master network node.

The method may further comprise performing at least a part of a radio link control functionality.

The part of the radio link control functionality may be performing a packet data unit segmentation.

According to a seventh aspect of general embodiments of the present invention, a method is provided comprising
receiving and/or sending at least a first component carrier from and/or to a first network node, and
receiving and/or sending at least a second component carrier from and/or to a second network node.

The first network node may be a master network node, and the second network node may be a slave network node, for example.

According to an eighth aspect of several embodiments of the present invention, a computer program product is provided which comprises code means for performing a method according to any one of the fifth to seventh aspects and their modifications when run on a processing means or module.

The computer program product may comprise a computer-readable medium on which the software code portions are stored, and/or wherein the program is directly loadable into a memory of the processor. According to a ninth aspect of several embodiments of the invention, an apparatus is provided which comprises
means for receiving and/or data for a user equipment from and/or to a network,
means for controlling a split of the data for at least two component carriers,
means for performing a downlink and/or uplink transmission with a user equipment via at least a first one of the at least two component carriers, and
sending and/or receiving the data for at least a second one of the at least two component carriers to and/or from a slave network node.

According to a tenth aspect of several embodiments of the invention, an apparatus is provided which comprises
means for receiving and/or sending data for at least one component carrier for a user equipment from and/or to a master network node, and
means for performing a downlink and/or an uplink transmission with the user equipment via the at least one component carrier.

According to an eleventh aspect of several embodiments of the invention, an apparatus is provided which comprises
receiving and/or sending at least a first component carrier from and/or to a first network node, and
receiving and/or sending at least a second component carrier from and/or to a second network node.

In the above aspects, the apparatus according to the first and ninth aspect may be a master network node or a part thereof, the apparatus according to the second and tenth aspect may be a slave network node, and the apparatus according to the third and eleventh aspect may be a user equipment. For example, the master network node and the slave network node may be a base station such as a eNB.

It is to be understood that any of the above modifications can be applied singly or in combination to the respective aspects and/or embodiments to which they refer, unless they are explicitly stated as excluding alternatives.

For the purpose of the present invention as described herein above, it should be noted that
- method steps likely to be implemented as software code portions and being run using a processor at a network element or terminal (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the invention in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above, eNode-B etc. as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined apparatuses, or any one of their respective means) can be implemented as individual devices, units or means, but this does not exclude that they are implemented in a distributed fashion throughout the system, as long as the functionality of the device, unit or means is preserved;
- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

It is noted that the embodiments and examples described above are provided for illustrative purposes only and are in no way intended that the present invention is restricted thereto. Rather, it is the intention that all variations and modifications be included which fall within the scope of the appended claims.

## Claims

1. A system comprising a master network node (21) serving a first cell on a first component carrier and a slave network node (22) serving a smaller second cell on a second component carrier,
wherein both the master network node (21) and the slave network node (22) are Long Term Evolution, LTE, nodes or High Speed Data Packet Access, HSPA, nodes; and
wherein the master network node (21) comprises:
a network interface configured to receive and/or send data for a user equipment (23) from and/or to a network,
a processor configured to control a split of the data for the first cell and the smaller second cell, and
a transceiver unit configured to perform a downlink and/or uplink transmission with the user equipment (23) via the first cell,
wherein the processor is configured to send and/or receive the data to and/or from the slave network node (22) to perform a downlink and/or uplink transmission with the user equipment (23) via the smaller second cell.

2. The system according to claim 1, wherein the data for the smaller second cell sent to and/or received from the slave network node (22) are for said user equipment.

3. The system according to claim 1 or 2, wherein the processor comprises at least a part of a radio link control functionality.

4. The system according to any one of the claims 1 to 3, wherein the processor comprises a packet data control protocol functionality.

5. The system according to any one of the claims 1 to 4, wherein the processor comprises a radio resource control functionality.

6. The system according to any one of the claims 1 to 5, wherein the transceiver unit comprises an independent transceiver for each component carrier and a common packet scheduler.

7. The system according to any one of the claims 1 to 6, wherein the processor is configured to send and/or receive the data for the smaller second cell based on a request from the slave network node (22) and/or based on load conditions of the slave network node (22) and the master network node (21).

8. The system according to any one of the claims 1 to 4, wherein the processor is configured to configure a network node to act as the slave network node (22) and/or to disable a slave network node (22) via a control signalling.

9. A method performed by a system comprising a master network node (21) and a slave network node (22) comprising:
receiving and/or sending, by a master network node (21), data for a user equipment (23) from and/or to a network,
controlling, by the master network node (21), a split of the data for a first cell and a smaller second cell,
performing, by the master network node (21), a downlink and/or uplink transmission with the user equipment (23) via the first cell,
sending and/or receiving, by the master network node (21), the data for the second cell to and/or from a slave network node (22),
receiving and/or sending, by the slave network node (22), the data for the second cell from and/or to the master network node (21), and
performing, by the slave network node (22), a downlink and/or an uplink transmission with the user equipment (23) via the second cell,
wherein the master network node (21) serves the first cell on a first component carrier and the slave network node (22) serves the smaller second cell on a second component carrier, wherein both the master network node (21) and the slave network node (22) are Long Term Evolution, LTE, nodes or High Speed Data Packet Access, HSPA, nodes.

## Patentansprüche

1. System, umfassend einen Master-Netzwerkknoten (21), bedienend eine erste Zelle auf einem ersten Komponententräger und einen Slave-Netzwerkknoten (22), der eine kleinere zweite Zelle auf einem zweiten Komponententräger bedient,
wobei sowohl der Master-Netzwerkknoten (21) als auch der Slave-Netzwerkknoten (22) LTE-Knoten ("Long Term Evolution"), oder HSPA-Knoten ("High Speed Data Packet Access") sind; und
wobei der Master-Netzwerkknoten (21) umfasst:
eine Netzwerkschnittstelle, die zum Empfangen und/oder Senden von Daten für eine Benutzerausrüstung (23) von und/oder zu einem Netzwerk ausgelegt ist,
einen Prozessor, der zum Steuern einer Aufteilung der Daten für die erste Zelle und die kleinere zweite Zelle ausgelegt ist, und
eine Sende-Empfängereinheit, die zum Durchführen einer Downlink- und/oder Uplinkübertragung mit der Benutzerausrüstung (23) über die erste Zelle ausgelegt ist,
wobei der Prozessor zum Senden und/oder Empfangen der Daten zu und/oder von dem Slave-Netzwerkknoten (22) ausgelegt ist, um eine Downlink- und/oder Uplinkübertragung mit der Benutzerausrüstung (23) über die kleinere zweite Zelle durchzuführen.

2. System nach Anspruch 1, wobei die Daten für die kleinere zweite Zelle, die an den Slave-Netzwerkknoten (22) gesendet und/oder von diesem empfangen werden, für die Benutzerausrüstung bestimmt sind.

3. System nach Anspruch 1 oder 2, wobei der Prozessor mindestens einen Teil einer Funkverbindungssteuerungsfunktionalität umfasst.

4. System nach einem der Ansprüche 1 bis 3, wobei der Prozessor eine Paketdatenksteuerungsprotokollfunktionalität umfasst.

5. System nach einem der Ansprüche 1 bis 4, wobei der Prozessor eine Funkressourcensteuerungsfunktionalität umfasst.

6. System nach einem der Ansprüche 1 bis 5, wobei die Sende-Empfängereinheit einen unabhängigen Sende-Empfänger für jeden Komponententräger und einen gemeinsamen Paketplaner umfasst.

7. System nach einem der Ansprüche 1 bis 6, wobei der Prozessor zum Senden und/oder Empfangen der Daten für die kleinere zweite Zelle basierend auf einer Anforderung des Slave-Netzwerkknotens (22) und/oder basierend auf Lastbedingungen des Slave-Netzwerkknotens (22) und des Master-Netzwerkknotens (21) ausgelegt ist.

8. System nach einem der Ansprüche 1 bis 4, wobei der Prozessor zum Konfigurieren eines Netzwerkknotens ausgelegt ist, um als Slave-Netzwerkknoten (22) zu fungieren und/oder einen Slave-Netzwerkknoten (22) über eine Steuersignalisierung zu deaktivieren.

9. Verfahren, das von einem System durchgeführt wird, das einen Master-Netzwerkknoten (21) und einen Slave-Netzwerkknoten (22) umfasst, umfassend:
Empfangen und/oder Senden von Daten für eine Benutzerausrüstung (23) von und/oder zu einem Netzwerk durch einen Master-Netzwerkknoten (21),
Steuern einer Aufteilung der Daten für eine erste Zelle und eine kleinere zweite Zelle durch den Master-Netzwerkknoten (21),
Durchführen einer Downlink- und/oder Uplinkübertragung mit der Benutzerausrüstung (23) durch den Master-Netzwerkknoten (21) über die erste Zelle,
Senden und/oder Empfangen der Daten für die zweite Zelle an und/oder von einem Slave-Netzwerkknoten (22) durch den Master-Netzwerkknoten (21),
Empfangen und/oder Senden der Daten für die zweite Zelle von und/oder zu dem Master-Netzwerkknoten (21) durch den Slave-Netzwerkknoten (22), und
Durchführen einer Downlink und/oder Uplinkübertragung mit der Benutzerausrüstung (23) durch den Slave-Netzwerkknoten (22) über die zweite Zelle,
wobei der Master-Netzwerkknoten (21) die erste Zelle auf einem ersten Komponententräger und der Slave-Netzwerkknoten (22) die kleinere zweite Zelle auf einem zweiten Komponententräger bedient, wobei sowohl der Master-Netzwerkknoten (21) als auch der Slave-Netzwerkknoten (22) LTE-Knoten ("Long Term Evolution") oder HSPA-Knoten ("High Speed Data Packet Access") sind.

## Revendications

1. Système comprenant un noeud de réseau maître (21) desservant une première cellule sur une première porteuse partielle et un noeud de réseau esclave (22) desservant une deuxième cellule plus petite sur une deuxième porteuse partielle,
aussi bien le noeud de réseau maître (21) que le noeud de réseau esclave (22) étant des noeuds d'évolution à long terme, LTE, ou des noeuds d'accès par paquets de données haute vitesse, HSPA ; et
dans lequel le noeud de réseau maître (21) comprend :
une interface réseau configurée pour recevoir et/ou envoyer des données pour un équipement utilisateur (23) en provenance et/ou à destination d'un réseau,
un processeur configuré pour commander une division des données pour la première cellule et la deuxième cellule plus petite, et
une unité émettrice-réceptrice configurée pour effectuer une transmission de liaison descendante et/ou de liaison montante avec l'équipement utilisateur (23) par l'intermédiaire de la première cellule,
le processeur étant configuré pour envoyer et/ou recevoir les données à destination et/ou en provenance du noeud de réseau esclave (22) pour effectuer une transmission de liaison descendante et/ou de liaison montante avec l'équipement utilisateur (23) par l'intermédiaire de la deuxième cellule plus petite.

2. Système selon la revendication 1, dans lequel les données pour la deuxième cellule plus petite, envoyées au et/ou reçues du noeud de réseau (22), sont destinées audit équipement utilisateur.

3. Système selon la revendication 1 ou 2, dans lequel le processeur comprend au moins une partie d'une fonctionnalité de commande de liaison radio.

4. Système selon l'une quelconque des revendications 1 à 3, dans lequel le processeur comprend une fonctionnalité de protocole de commande de données par paquets.

5. Système selon l'une quelconque des revendications 1 à 4, dans lequel le processeur comprend une fonctionnalité de commande de ressource radio.

6. Système selon l'une quelconque des revendications 1 à 5, dans lequel l'unité émettrice-réceptrice comprend un émetteur/récepteur indépendant pour chaque porteuse partielle et un ordonnanceur de paquets commun.

7. Système selon l'une quelconque des revendications 1 à 6, dans lequel le processeur est configuré pour envoyer et/ou recevoir les données pour la deuxième cellule plus petite sur la base d'une demande du noeud de réseau esclave (22) et/ou sur la base de conditions de charge du noeud de réseau esclave (22) et du noeud de réseau maître (21).

8. Système selon l'une quelconque des revendications 1 à 4, dans lequel le processeur est configuré pour configurer un noeud de réseau pour servir de noeud de réseau esclave (22) et/ou pour désactiver un noeud de réseau esclave (22) par l'intermédiaire d'une signalisation de commande.

9. Procédé effectué par un système comprenant un noeud de réseau maître (21) et un noeud de réseau esclave (22), comprenant :
la réception et/ou l'envoi, par un noeud de réseau maître (21), de données pour un équipement utilisateur (23) en provenance et/ou à destination d'un réseau,
la commande, par le noeud de réseau maître (21), d'une division des données pour une première cellule et une deuxième cellule plus petite,
l'exécution, par le noeud de réseau maître (21), d'une transmission de liaison descendante et/ou de liaison montante avec l'équipement utilisateur (23) par l'intermédiaire de la première cellule,
l'envoi et/ou la réception, par le noeud de réseau maître (21), des données pour la deuxième cellule à destination et/ou en provenance d'un noeud de réseau esclave (22),
la réception et/ou l'envoi, par le noeud de réseau esclave (22), des données pour la deuxième cellule en provenance et/ou à destination du noeud de réseau maître (21), et
l'exécution, par le noeud de réseau esclave (22), d'une transmission de liaison descendante et/ou de liaison montante avec l'équipement utilisateur (23) par l'intermédiaire de la deuxième cellule,
dans lequel le noeud de réseau maître (21) dessert la première cellule sur une première porteuse partielle et le noeud de réseau esclave (22) dessert la deuxième cellule plus petite sur une deuxième porteuse partielle, aussi bien le noeud de réseau maître (21) que le noeud de réseau esclave (22) étant des noeuds d'évolution à long terme, LTE, ou des noeuds d'accès par paquets de données haute vitesse, HSPA.
